# EUROPEAN PATENT APPLICATION

(11) **EP 2 896 553 A1**
(43) Date of publication of application: **22.07.2015**
(21) Application number: 15150569.0
(22) Date of filing: 09.01.2015
(51) Int. Cl.: B62K 13/06

(54) **Quadricycle**

(30) Priority: 15.01.2014 IT MI20140042
(71) Applicant: Pozzi, Ernesto, 29010 Cicogni di Pecorara (PC) (IT)
(72) Inventor: Pozzi, Ernesto, 29010 Cicogni di Pecorara (PC) (IT)
(74) Representative: Cicogna, Franco

(57) **Abstract**

A quadricycle (1) comprises associating means (2) for coupling the frames or frameworks of two bicycles (100, 200) arranged in a parallel arrangement with respect to a drive direction, said associating means (2) further comprising connecting means (5, 6) for at least partially connecting driving, steering and braking means of said bicycles.

## Description

### BACKGROUND OF THE INVENTION

The present invention relates to a quadricycle construction or structure.

More specifically, the present invention relates to a construction for connecting two conventional bicycles to form a four-wheel vehicle.

Quadricycles comprising a quadricycle framework, usually made of metal tubes to which are applied two front steering wheels and two rear wheels driven by a pedal drive, usually of a double type, to allow two persons to simultaneously pedal, are already known.

A problem of prior quadricycle constructions is their comparatively high cost, since they are made in a limited number, and have a comparatively large weight and size.

### SUMMARY OF THE INVENTION

The aim of the present invention is to provide such a quadricycle construction solving the above mentioned prior art problems.

Within the scope of the above mentioned aim, a main object of the invention is to provide such a quadricycle construction which may be easily assembled and, when it is not used, correspondingly quickly and easily disassembled to provide two regular or conventional bicycles.

Another object of the present invention is to provide such a quadricycle construction which may be made by using commercially available elements and materials and which, moreover, is very competitive from a mere economic standpoint.

Yet another object of the present invention is to provide such a quadricycle construction which, owing to its specifically designed structural features, is very reliable and safe in operation.

According to one aspect of the present invention, the above mentioned aim and objects, as well as yet other objects, which will become more apparent hereinafter, are achieved by a quadricycle construction, characterized in that said quadricycle construction comprises associating means for coupling the frames of two bicycles, arranged in a parallel arrangement with respect to a drive direction, said associating means comprising moreover connecting means for at least partially connecting driving, steering and braking means of said bicycles.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative but not limitative example, in the accompanying drawings, where:

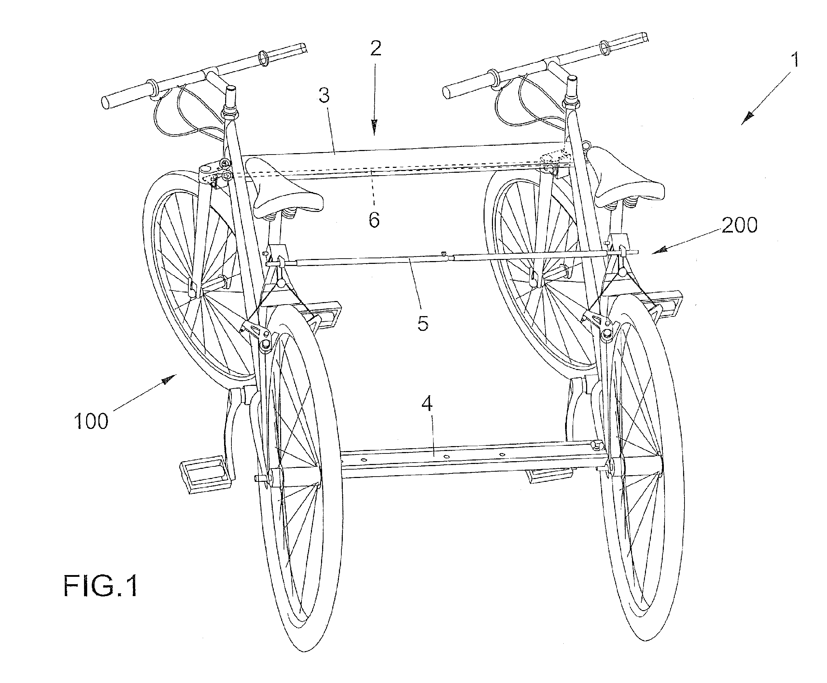

Figure 1 is a perspective view showing the quadricycle construction according to the present invention, being illustrated in an assembled and ready for use condition;

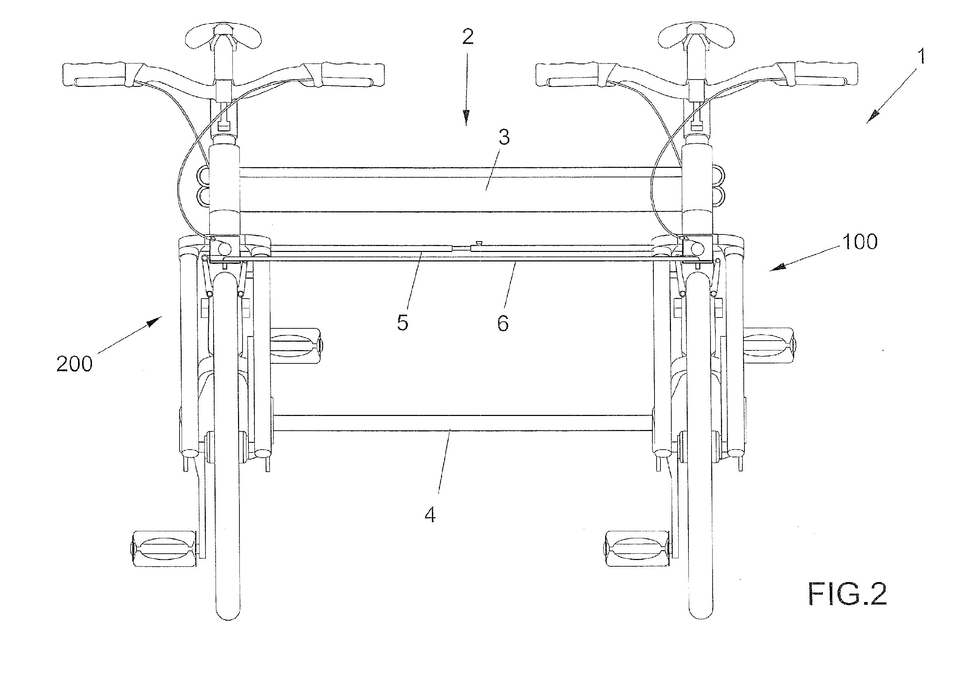

Figure 2 is a front elevation view of the inventive quadricycle construction;

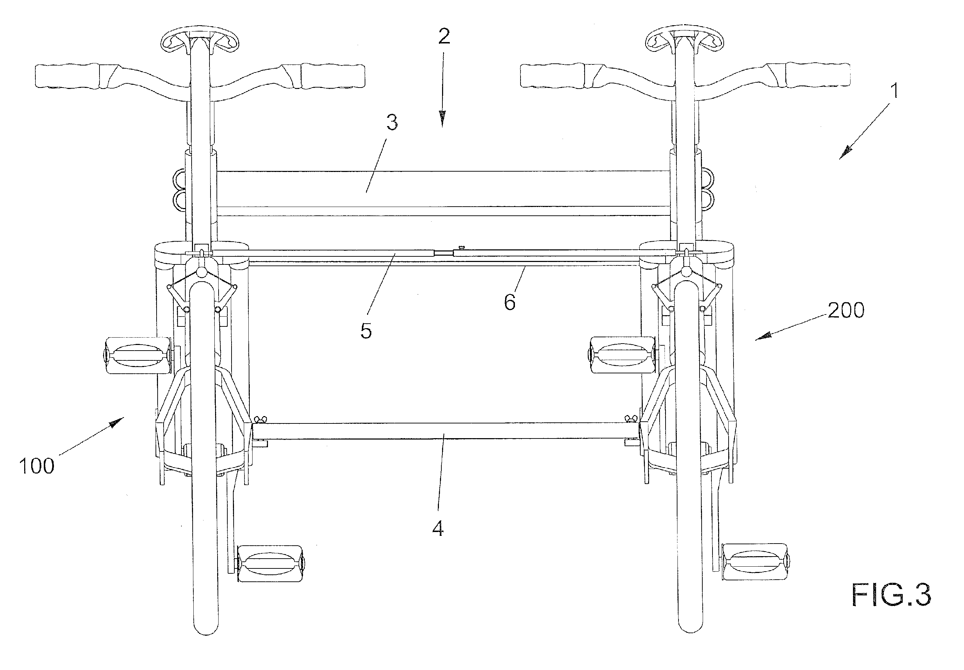

Figure 3 is a rear elevation view of the inventive quadricycle construction;
Figure 4 is an exploded perspective view of the quadricycle construction according to the present invention; and
Figure 5 is yet another perspective view showing the device for coupling the front brakes of the quadricycle construction.

### DESCRIPTION OF THE PREFERRED EMBODIMENTS

With reference to the number references of the above mentioned figures, the quadricycle construction according to the present invention, which has been generally indicated by the reference number 1, comprises associating means, generally indicated by the reference number 2, adapted to connect the frames of two bicycles, indicated by the reference numbers 100 and 200 respectively, arranged in a parallel arrangement with respect to a drive or run direction.

Said associating means comprise at least a front cross element 3, preferably constituted by a metal base spacer member, for connecting the front part of the frames of the two bicycles, at the steering sleeve member or head tube, and at least a rear spacer member 4, preferably constituted by a metal section member for connecting the rear part of the respective bicycle frames.

The rear cross member 4 is preferably connected to each bicycle frame or framework at the rear wheel attachment zone to the rear fork member of said bicycle frame, by a suitable bracket affixed to the rear hub.

Thus, the spacer members 3 and 4 rigidly connect the frames or frameworks of the two bicycles.

The construction further comprises steering coupling means for coupling the steering assemblies of the two bicycles, said steering coupling means comprising a guide tie-rod 6 which has its end portions affixed to each fork of the bicycles 100 and 200.

The end portions of the guide tie-rod 6 comprise lugs for engaging a recess eccentrically formed in each bicycle fork, thereby defining a parallelogram system, thereby, by operating one of the bicycle handlebars, the two bicycle forks will be driven in unison.

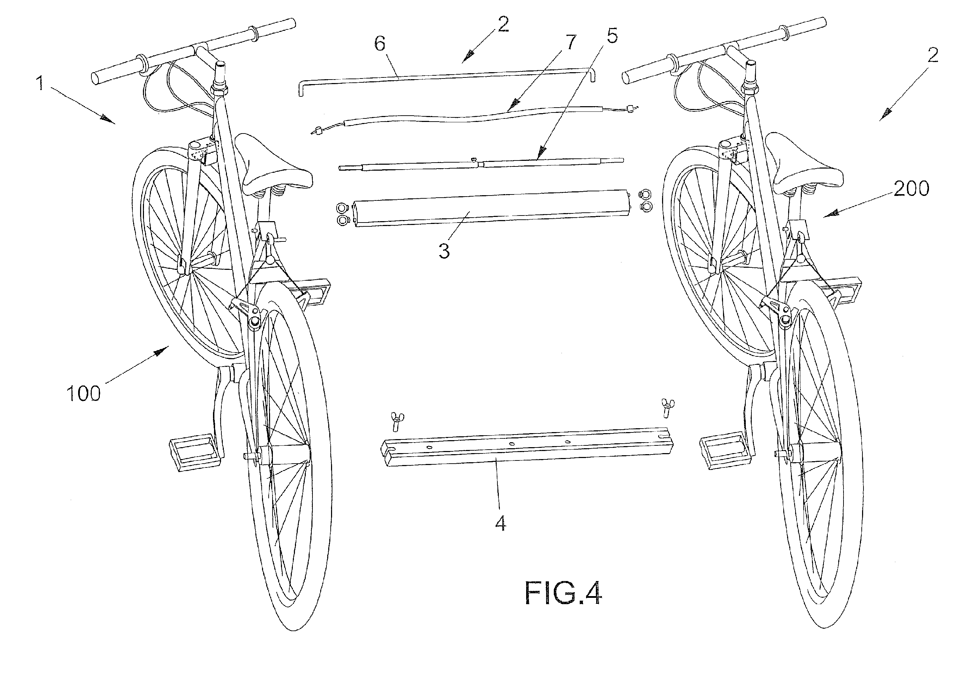

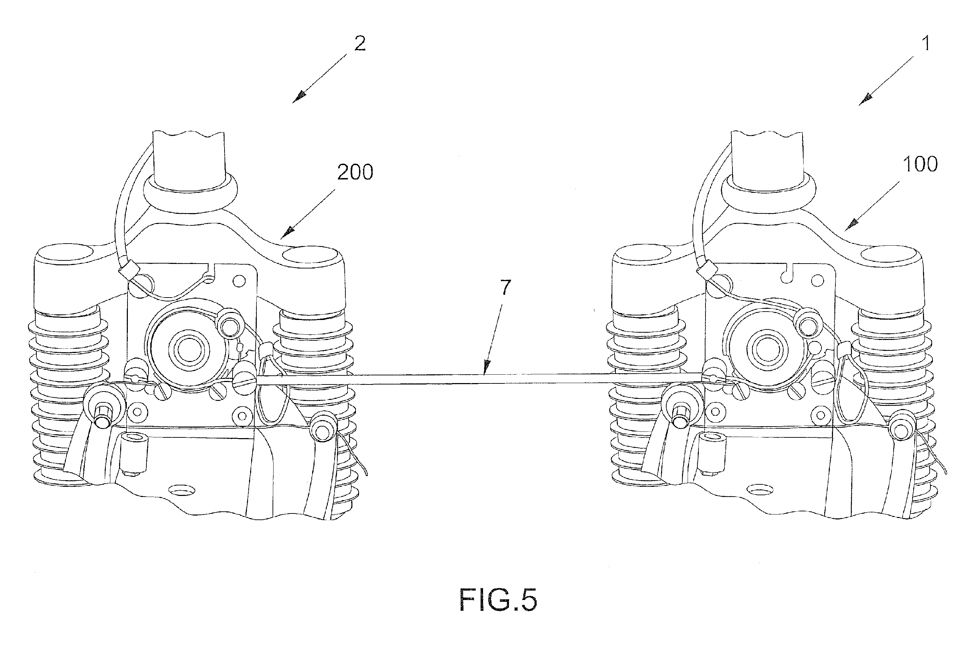

The subject construction comprises moreover optional brake coupling means for coupling the brakes of the two bicycles, said brake coupling means comprising flexible elements, schematically shown in Figures 4 and 5, allowing, by operating a lever of one of the two bicycles, to simultaneously drive the related rear or front brake of both said bicycles.

Figure 4 shows the flexible element 7 for coupling the bicycle front brakes.

The inventive construction comprises moreover optional coupling means for coupling the drive assembly of the two bicycles.

In particular, the construction drive may be of at least three types: an independent drive in which the two bicycle pedals operate in an independent manner on the respective bicycle drive wheels; a drive in which the pedals are mutually synchronized; or a drive in which the hubs of two drive wheels are connected, for example by a drive bar or rod.

It has been found that the invention fully achieves the intended aim and objects.

In fact, the invention has provided a quadricycle construction allowing to connect two regular bicycles by a small number of coupling components which may be easily assembled to provide a four wheel pedal vehicle.

The inventive construction allows to make a quadricycle of a cost much lower than a conventional one, and allows moreover to easily obtain the two original bicycles, in a perfectly operating manner and in a very short disassembling time.

For example, two regular bicycles including 26" bicycle wheels, may be arranged side by side at a distance of about 70 cm therebetween, to provide a compact quadricycle having a small size, with a consequent great advantage in a road use.

The inventive construction allows moreover to make an inexpensive play quadricycle, while preserving the component bicycles.

The inventive construction provides moreover an inexpensive and quick system for allowing the bicycle to be used by disabled persons.

Furthermore, the inventive quadricycle construction may by applied to different bicycle types, provided that they are compatible and preferably identical to one another.

In practicing the invention, the used materials, as well as the contingent size and shapes, can be any, according to requirements.

## Claims

1. A quadricycle construction, **characterized in that** said quadricycle construction comprises associating means for coupling the frames or frameworks of two bicycles, arranged in a parallel arrangement with respect to a drive direction, said associating means comprising moreover connecting means for at least partially connecting driving, steering and braking means of said bicycles.

2. A quadricycle construction, according to claim 1, **characterized in that** said associating means comprise at least a front spacer element, for coupling the front part of the frameworks of two bicycles, at the steering sleeve or head tube zone, and at least a rear spacer element, for coupling the rear part of said respective bicycle frameworks.

3. A quadricycle construction, according to claim 2, **characterized in that** said rear spacer element is coupled to each said bicycle framework at the attachment zone of the bicycle rear wheel to the rear fork of said framework, through a coupling bracket affixed to the bicycle rear hub.

4. A quadricycle construction, according to claim 2, **characterized in that** said front and rear spacer elements rigidly connect the two bicycle frameworks.

5. A quadricycle construction, according to one or more of the preceding claims, **characterized in that** said quadricycle construction comprises connecting means for connecting the steering assemblies of said two bicycles, said connecting means comprising a steering bar, having steering bar end portions affixed to each said fork of said bicycles.

6. A quadricycle construction, according to claim 5, **characterized in that** the guide tie-rod end portions comprise lugs for engaging a recess eccentrically formed in each said fork thereby defining a parallelogram system allowing the two forks to be driven in unison as one of the two bicycle handlebars is operated.

7. A quadricycle construction, according to one or more of the preceding claims, **characterized in that** said quadricycle construction comprises connecting means for connecting the brakes of the two bicycles, said connecting means comprising flexible elements allowing, as a lever of one of said two bicycles is operated, to simultaneously drive the related rear or front brakes of both said bicycles.

8. A quadricycle construction, according to one or more of the preceding claims, **characterized in that** said quadricycle construction comprises moreover drive connecting means for connecting the drive assemblies of the two bicycles, said drive connecting means comprising a coupling assembly for synchronizing the pedals of the two bicycles.

9. A quadricycle construction, according to one or more of the preceding claims, **characterized in that** said quadricycle construction comprises moreover drive connecting means for connecting the drive assemblies of said two bicycles, said drive connecting means comprising a drive bar connecting the hubs of the two bicycle drive wheels.
